# FASCICULE DE BREVET EUROPEEN

(11) **EP 1 893 487 B1**
(45) Date de publication et mention de la délivrance du brevet: **29.07.2009**
(21) Numéro de dépôt: 06778664.0
(22) Date de dépôt: 20.06.2006
(51) Int. Cl.: B64D 37/00, G01M 3/02

(54) **PROCEDE DE DETECTION DE FUITE DE CARBURANT DANS UN MOTEUR D'AERONEF ET SYSTEME DE MISE EN OEUVRE DE CE PROCEDE**
VERFAHREN ZUM ERKENNEN EINES TREIBSTOFFLECKS BEI EINEM FLUGZEUGTRIEBWERK UND SYSTEM ZUR AUSFÜHRUNG DES VERFAHRENS
METHOD FOR DETECTING A FUEL LEAKAGE IN AN AIRCRAFT ENGINE AND SYSTEM FOR CARRYING OUT SAID METHOD

(30) Priorité: 21.06.2005 FR 0551696
(43) Date de publication de la demande: 05.03.2008
(73) Titulaire: AIRBUS France, 31060 Toulouse (FR)
(72) Inventeur: RIVOT, Jean-Luc, F-31880 La Salvetat Saint Gilles (FR)
(74) Mandataire: Lebrette, Camille
(86) Numéro de dépôt international: PCT/FR2006/001467
(87) Numéro de publication internationale: WO 2006/136736

(56) Documents cités:
- US-A- 5 297 423
- WILLIAM TRANT: "FUEL LEAKS"[Online] 30 octobre 2004 (2004-10-30), XP002371999 Extrait de l'Internet: URL:http://web.archive.org/web/20041030184 925/http://www.pilotosdeiberia.com/areatec /airbus_sfo/13fuel_leak.htm> [extrait le 2006-03-14]
- BUREAU D'ENQUÊTES ET D'ANALYSES POUR LA SECURITE DE L'AVIATION CIVILE: "Incident survenu le 24 août 1997 entre Paris et Lorient à l'A320 immatriculé F-GHQH exploité par Air France"[Online] 10 octobre 2004 (2004-10-10), XP002371998 Extrait de l'Internet: URL:http://web.archive.org/web/20041010081 535/http://www.bea-fr.org/docspa/1997/f-qh 970824/htm/f-qh970824.html> [extrait le 2006-03-14]
- DATABASE WPI Week 05 Derwent Publications Ltd., London, GB; AN 2005-045268 XP002372001 "Method for notification of crew about fuel leak on aircraft during flight" -& RU 2 240 263 C (OKB SUKHOGO STOCK CO) 20 novembre 2004 (2004-11-20)

## Description

### Domaine de l'invention

L'invention concerne un procédé pour détecter et localiser une fuite de carburant dans un moteur d'aéronef. Ce procédé permet de détecter la présence d'une fuite dans un des moteurs d'un aéronef de type multi-moteur et de déterminer le moteur affecté par cette fuite. L'invention concerne également un système de mise en oeuvre de ce procédé.

L'invention trouve des applications dans le domaine de l'aéronautique et, en particulier, dans le domaine de la détection de fuite de carburant dans un aéronef.

### Etat de la technique

Dans le domaine de l'aéronautique, il est important de pouvoir déterminer l'existence d'une fuite de carburant dans le circuit d'alimentation en carburant des moteurs. En effet, la présence d'une fuite de carburant non détectée peut être problématique en ce qui concerne le plan de vol de l'avion, en particulier lorsque l'avion vole dans une zone éloignée de tout aéroport de diversion. Pour résoudre ce problème, la plupart des avions sont équipés d'un système de détection automatique de fuite de carburant. Ce système comporte des jaugeurs situés chacun dans un réservoir de carburant de l'avion et permettant de mesurer à chaque instant la quantité de carburant à bord. Il comporte également, pour chaque moteur, un débitmètre permettant de connaître le débit de carburant entrant dans le moteur et d'en déduire la quantité de carburant consommée par chaque moteur. Une comparaison d'une première consommation calculée à partir de la variation de la quantité de carburant à bord depuis le début du vol (donnée par les jauges de l'aéronef) avec une seconde consommation calculée à partir des débitmètres moteur depuis le début du vol (somme de tous les moteurs) permet de détecter la présence d'une fuite de carburant. En d'autres termes, ce système détermine la différence entre la première consommation et la seconde consommation, cette différence devant être nulle. Si cette différence n'est pas nulle, cela signifie qu'il y a une fuite de carburant à bord de l'avion.

Cependant, ce système permet de déterminer une fuite, dans le système d'alimentation en carburant, uniquement en amont du débitmètre, c'est-à-dire entre les réservoirs de carburant et les débitmètres des moteurs. Il ne permet donc pas de déterminer une fuite pour le reste des tuyauteries, en aval du débitmètre.

En outre, ce système permet uniquement de détecter la présence d'une fuite. Il ne permet pas de localiser la fuite. La localisation de la fuite est effectuée séquentiellement par une procédure opérationnelle en vol. Elle est réalisée en isolant, partie par partie, le circuit d'alimentation en carburant de l'avion.

Le document intitulé "FUEL LEAKS" de William TRANT, 10th Performance and Operations Conference, San Francisco, du 28-9-1998 au 2-10-1998 est considéré comme l'art antérieur le plus proche.

### Exposé de l'invention

L'invention a justement pour but de remédier aux inconvénients des techniques exposées précédemment, c'est-à-dire de pouvoir détecter une fuite en aval du débitmètre et de pouvoir identifier le moteur fuyant. A cette fin, l'invention propose un procédé pour détecter une fuite de carburant dans un moteur d'un aéronef de type multi-moteur, par exemple un aéronef quadriréacteur. Ce procédé est basé sur une comparaison de la consommation en carburant des différents moteurs de l'aéronef et sur la considération que le moteur ayant la plus forte consommation de carburant est susceptible de présenter une fuite. Un coefficient est alors déterminé pour connaître la proportion entre la consommation de carburant la plus élevée et une consommation moyenne des autres moteurs. Lorsque ce coefficient atteint une valeur prédéterminée, on considère qu'il y a une fuite. Le moteur présentant la fuite est alors déterminé comme étant celui qui a la plus forte consommation de carburant.

L'alimentation en carburant de ce moteur peut alors être coupée de façon à limiter les conséquences de cette fuite.

De façon plus précise, l'invention concerne un procédé de détection et de localisation d'une fuite de carburant dans un moteur d'un aéronef du type multi-moteur, **caractérisé en ce qu**'il comporte les opérations consistant à :
(a) déterminer une consommation de carburant, pour chaque moteur de l'aéronef,
(b) comparer la consommation de chaque moteur avec la consommation des autres moteurs de l'aéronef,
(c) détecter le moteur ayant la plus forte consommation de carburant,
(d) déterminer un ratio de surplus de consommation de ce moteur,
   par rapport aux autres moteurs,
(e) vérifier si le surplus de consommation provient d'une fuite, et
(f) si l'étape (e) est vérifiée, déclencher une alarme.

L'invention peut comporter également une ou plusieurs des caractéristiques suivantes :
- la consommation de carburant pour chaque moteur est une quantité de carburant utilisée pendant un premier intervalle de temps prédéfini.
- le premier intervalle de temps est un intervalle glissant.
- la consommation de carburant est le débit de carburant de chaque moteur.
- l'opération de vérification du surplus de consommation consiste à comparer la valeur du ratio de surplus avec une valeur seuil du ratio de surplus, prédéfinie, et à confirmer si la valeur du ratio de surplus est maintenue pendant un second intervalle de temps prédéfini.
- le second intervalle de temps évolue inversement proportionnellement à la valeur du ratio de surplus.
- les opérations (a) à (e) sont réalisées, simultanément, pour une quantité de carburant utilisée pendant le premier intervalle de temps et pour un débit de carburant.
- l'opération (f) est déclenchée si le surplus de consommation est détecté par la quantité de carburant ou par le débit de carburant.
- la valeur seuil du ratio pour le débit de carburant est supérieure à la valeur seuil du ratio pour la quantité de carburant.
- elle comporte une opération de localisation de la fuite avec détermination du moteur affecté de la fuite.
- l'alarme n'est déclenchée que si certains critères relatifs aux conditions de vol sont remplis.
- les opérations (a) et (b) ne sont réalisées que si les moteurs fonctionnent au même régime (premier critère).
- le critère est que l'aéronef vole à une altitude minimum (deuxième critère).
- le critère est que les moteurs fonctionnent au-dessus d'un régime minimum (troisième critère). Le régime minimum est le régime en dessous duquel le débit varie trop, ce qui rendrait la détection non représentative. La détection est alors inhibée.

L'invention concerne également un système de détection et de localisation d'une fuite de carburant dans un moteur d'un aéronef du type multi-moteur, **caractérisé en ce qu**'il met en oeuvre le procédé décrit précédemment.

Ce système peut comporter une ou plusieurs des caractéristiques suivantes :
- il est installé dans un calculateur d'aéronef et connecté, pour chaque moteur, à un calculateur de moteur afin de recevoir des données relatives aux conditions de fonctionnement de l'aéronef et de chaque moteur.
- le calculateur d'aéronef comporte des circuits logiques aptes à traiter des données reçues des calculateurs moteurs et du calculateur d'aéronef.
- le système comporte un circuit de vérification des conditions de vol, au moins un circuit de détection du ratio de surplus de consommation, et un circuit de déclenchement d'une alarme.

L'invention concerne également un aéronef comportant un système tel que décrit précédemment.

### Brève description des dessins

La figure 1 représente un circuit électronique de détermination d'un coefficient de consommation de carburant d'un moteur pendant un intervalle de temps prédéterminé, dans le calculateur du moteur.
La figure 2 représente un circuit électronique de vérification des conditions de vol pour la mise en oeuvre du procédé de l'invention, dans le calculateur avion.
La figure 3 représente le circuit électronique de détermination du coefficient de consommation du moteur ayant la consommation la plus élevée.
La figure 4 représente le circuit électronique de détermination du coefficient de débit de carburant pour le moteur ayant le débit de carburant le plus élevé.
La figure 5 représente le circuit électronique de déclenchement d'une alarme utilisant les coefficients des déterminés dans les circuits des figures 3 et 4.

### Description détaillée de modes de réalisation de l'invention

L'invention propose un procédé et un système pour détecter la présence d'une fuite dans un moteur d'aéronef et localiser cette fuite. Ce système peut être installé dans le calculateur d'un aéronef multi-moteur, c'est-à-dire comportant plusieurs moteurs, par exemple quatre. Ce système met en oeuvre le procédé de l'invention qui va être décrit à travers la description des circuits formant le système de l'invention.

Le système de détection et de localisation de l'invention comporte plusieurs circuits électroniques, connectés les uns aux autres, et recevant des données de chaque calculateur de moteur, ou FADEC, ainsi que d'autres calculateurs de l'avion. Ces circuits électroniques assurent le traitement de ces données pour déterminer la consommation en carburant de chaque moteur de l'aéronef et pour en déduire une éventuelle fuite dans un des moteurs.

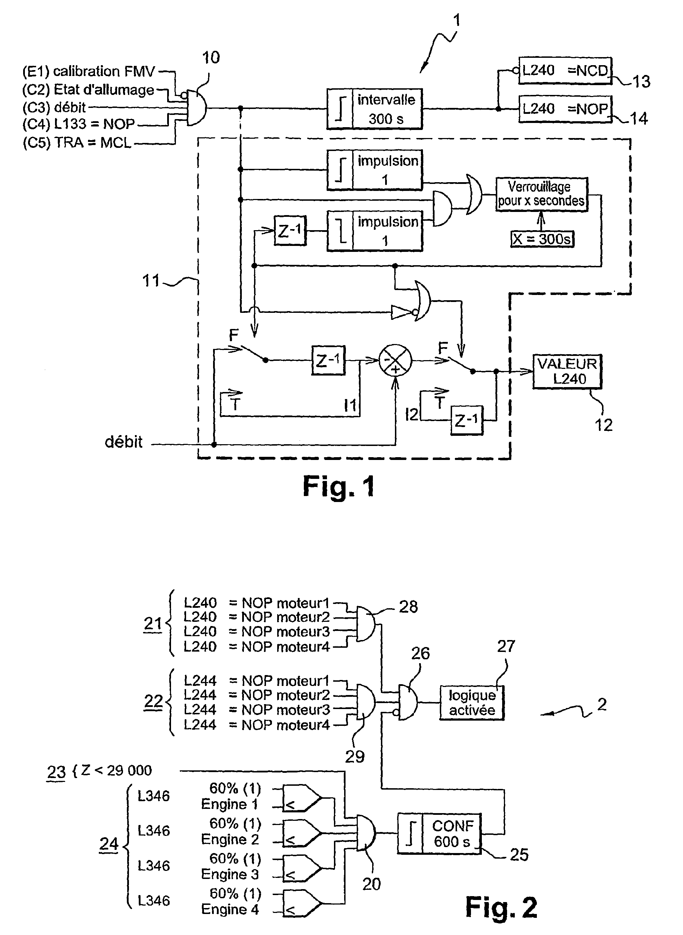

Les différents circuits électroniques du système de l'invention sont représentés sur les figures 1 à 5. Plus précisément, la figure 1 représente un circuit électronique situé dans un calculateur de moteur et permettant de déterminer la consommation de carburant de ce moteur, pendant un premier intervalle de temps prédéterminé. Autrement dit, ce circuit de la figure 1 permet de déterminer la quantité de carburant utilisée par le moteur auquel il est associé, pendant un premier intervalle de temps. La quantité de carburant utilisée pendant un intervalle de temps est un premier mode d'évaluation de la consommation d'un moteur. Comme on le verra par la suite, le débit de carburant d'un moteur est un autre mode d'évaluation de la consommation de carburant du moteur.

Le premier intervalle de temps prédéterminé est, par exemple, un intervalle de 5 minutes. La taille de l'intervalle est choisie notamment en fonction des caractéristiques de l'avion, du nombre de moteurs et des caractéristiques de ces moteurs. Ce premier intervalle de temps est un intervalle glissant, c'est-à-dire que la consommation de carburant est réévaluée en temps réel, sur une fenêtre de 5 minutes précédant l'instant de calcul.

Le circuit électronique 1 de la figure 1 est un circuit connu, présent dans la plupart des calculateurs de moteurs. Il est donc décrit ici uniquement pour expliquer la provenance de certaines données utilisées par le système de l'invention.

La quantité de carburant consommée pendant le premier intervalle de temps, déterminée par le circuit de la figure 1, est appelée label 240 et référencée L240. Ce label 240 est déterminé pour chaque moteur, par chaque calculateur de moteur. Ce label 240 est déterminé en prenant en compte, pendant un temps de confirmation de 300 secondes (soit de 5 minutes), les critères suivants :
- (c1) la calibration FMV du moteur : on vérifie qu'il n'y a pas d'erreur de calibration de la FMV - Fuel Metering Valve - c'est-à-dire qu'on vérifie si la position du doseur assurant le passage du carburant dans le moteur correspond à la valeur du débitmètre ; si ce n'est pas le cas, alors il y a une erreur de calibration. Le calculateur moteur vérifie en permanence si, à une position de la FMV donnée, correspond bien la valeur de débit donnée par le débitmètre. S'il y a une erreur de x %, le calculateur moteur indique qu'il y a un problème de calibration de la FMV.
- (c2) l'état d'allumage du moteur (on vérifie si le moteur est bien en fonctionnement),
- (c3) l'information de débit de carburant moteur est valide,
- (c4) l'information de la position manette (TRA) est valide
- (c5) la position de la manette de pilotage TRA : la manette de pilotage peut prendre plusieurs positions en fonction du régime moteur ; dans le procédé de l'invention, on vérifie si cette manette est dans la position MCL, c'est-à-dire la position utilisée pour le pilotage automatique, ce qui assure que tous les moteurs de l'aéronef sont dans le même régime moteur.

La porte logique ET, référencée 10, permet de déterminer si tous ces critères c1 à c5 sont vérifiés. Si un seul de ces critères c1 à c5 n'est pas vérifié, et si cela est confirmé pendant le premier intervalle de temps (par exemple 300 secondes), alors le label 240 est mis à la valeur NCD, à l'étape 13, c'est-à-dire qu'il est considéré comme non calculable. Au contraire, si tous ces critères sont remplis et confirmés pendant ce premier intervalle de temps, le label 240 peut être déterminé et, dans ce cas, le paramètre L240 est mis à la valeur NOP, à l'étape 14, c'est-à-dire qu'il est considéré comme calculé et valide pour la suite des calculs.

Lorsque tous ces critères sont vérifiés, alors le circuit 11 calcule, en fonction de la valeur du débit de carburant, la valeur L240 à chaque instant. Cette valeur L240 est obtenue à l'étape 12 et transmise au circuit électronique 2 de la figure 2.

Le circuit 2 du système de l'invention assure une vérification de l'activation de la logique dans le calculateur d'avion. Ce circuit de vérification 2 a pour but de vérifier si tous les critères nécessaires à la mise en oeuvre du procédé de l'invention sont vérifiés.

Pour cela, le circuit 2 reçoit, à l'étape 21, la condition des labels 240 de chaque moteur. Dans l'exemple qui est décrit, l'avion est un quadriréacteur qui comporte donc quatre moteurs référencés 1, 2, 3 et 4. On a représenté, à la référence 21, le label 240 à la valeur NOP pour le moteur 1, pour le moteur 2, pour le moteur 3 et pour le moteur 4. Si aucun de ces labels 240 est invalide, alors, par un jeu de portes logiques 28 et 26, on en déduit que la logique de détection de fuite peut être activée à l'étape 27.

Parallèlement, le circuit 2 reçoit, à l'étape 22, la condition des labels 244 de chaque moteur. Un label 244, noté L244, correspond au débit de carburant de chacun des moteurs 1, 2, 3 et 4. Comme expliqué précédemment, le débit de carburant de chaque moteur est un mode d'estimation de la consommation du moteur. La valeur de débit de carburant, pour chaque moteur, est donnée par le débitmètre du moteur. La consommation en carburant d'un moteur est donc estimée par le débit ou par la quantité de carburant consommée, par exemple en 5 minutes. Comme on le verra plus en détail par la suite, ces deux modes d'estimation de la consommation de carburant sont calculés en parallèle et utilisés en fonction de l'importance de la fuite détectée. En particulier, lorsque la fuite est peu importante, l'estimation et la localisation de la fuite sont basées sur l'information fournie par le label 240 et si la fuite est relativement importante, l'estimation et la localisation de la fuite sont basées sur l'information fournie par le label 244.

Le circuit 2 reçoit donc le label 244 de chaque moteur et vérifie, par le jeu des portes logiques 29 et 26, que tous les labels 244 sont à la valeur NOP, c'est-à-dire que le label 244 est déterminable pour chaque moteur. Comme pour le label 240, si un des labels 244 d'un des moteurs n'est pas valide, alors le procédé de l'invention ne se poursuit pas. Au contraire, si tous les labels 244 sont valides, alors le procédé peut se poursuivre par l'activation de la logique de détection de fuite, à l'étape 27.

Le circuit 2 reçoit, à l'entrée 23, la valeur de l'altitude de l'aéronef. L'altitude Z de l'aéronef constitue aussi un critère pour la poursuite du procédé à l'étape 27. On considère donc qu'il est nécessaire que l'altitude soit égale ou supérieure à une altitude minimum de croisière, par exemple de 29 000 pieds. En effet, il est fréquent, lorsque l'altitude descend en dessous de 29 000 pieds, qu'il y ait des différences de débit, même si les moteurs fonctionnent au même régime, à cause des prises de puissance des circuits électriques, des circuits hydrauliques, etc. Aussi, en dessous de cette altitude minimum, la détection de fuite de carburant est inhibée, dans le procédé de l'invention.

Le circuit 2 reçoit, à l'entrée 24, le label 346 de chaque moteur. Ce label 346 correspond au régime du compresseur basse pression de chaque moteur. En effet, si les régimes des compresseurs basse pression sont au ralenti, cela suppose que l'avion est en descente. Aussi, si les compresseurs basse pression sont au ralenti et que l'altitude de l'aéronef est inférieure à une altitude Z, par exemple de 29 000 pieds, cela confirme que l'aéronef est en descente. Et si cela est confirmé pendant un temps 25, par exemple de 600 secondes, alors, par un jeu de portes logiques 20 et 26, on en déduit que la logique de détection de fuite ne peut être activée à l'étape 27.

Le circuit 2 de la figure 2 permet donc, lorsque la logique est activée en 27, de s'assurer que le procédé va prendre en compte des consommations de carburant comparables puisque, à priori, égales si le fonctionnement de tous les moteurs est normal. Il est à noter toutefois que, comme pour tout moteur, il peut y avoir des variations de consommation d'un moteur à un autre en fonction de l'âge du moteur, des incertitudes dues à la mécanique, des standards d'évolution du moteur, des prises de puissance (circuits hydrauliques, circuits électriques et air), etc. Ces variations, hors fuite, sont relativement peu élevées, de l'ordre de 15 % à 20 %.

Lorsque la logique de détection de fuite est activée à l'étape 27, le procédé se poursuit dans les circuits 3 et 4 des figures respectives 3 et 4.

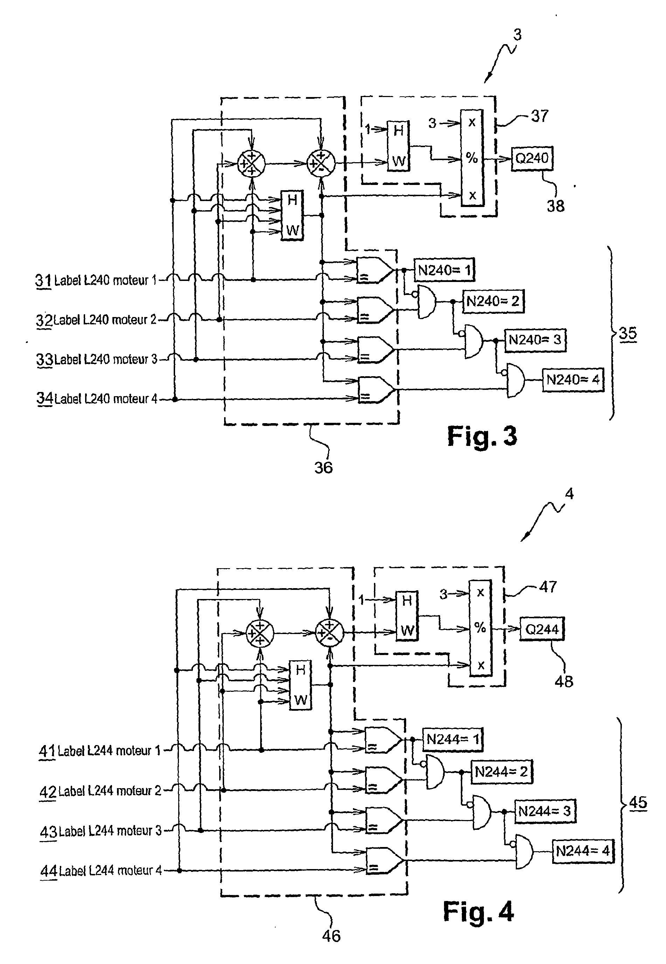

La figure 3 représente un circuit électronique 3 de détermination du coefficient de surplus de consommation, par le moteur ayant la plus grande consommation de carburant. Ce circuit 3 reçoit, aux entrées 31, 32, 33 et 34, les valeurs des labels 240 des moteurs, respectivement, 1, 2, 3 et 4. Autrement dit, ce circuit 3 reçoit, sur l'entrée 31, la quantité de carburant utilisée en 5 minutes par le moteur 1, sur l'entrée 32, la quantité de carburant utilisée en 5 minutes par le moteur 2, etc. Un ensemble d'éléments logiques 36 permet de comparer la valeur du label 240 de chaque moteur avec la valeur du label 240 des autres moteurs. On détermine ainsi la valeur du label 240 la plus élevée et, par conséquent, le moteur ayant la consommation la plus importante, du point de vue de la quantité de carburant utilisée en 5 minutes. Lorsque ce moteur a été déterminé, un message peut être affiché sur un écran du poste de pilotage de l'avion. Ce message, référencé 35, donne le numéro du moteur ayant le plus grand label 240. Par exemple, si c'est le moteur n°4 qui a le plus grand label 240, alors l'information 35 est N240 = 4.

Le résultat de cette comparaison est également utilisé, à l'étape 37, pour déterminer le coefficient de surplus de consommation, appelé aussi ratio de surplus de consommation et référencé Q240. Ce coefficient de surplus de consommation Q240 correspond à la valeur obtenue en divisant la valeur du label 240 du moteur ayant le plus grand label 240 par la moyenne des autres labels 240. Par exemple, si les moteurs 1, 2 et 3 ont un label 240 de 200, et le moteur 4 un label 240 de 400, alors le coefficient Q240 est égal à 200 %, ce qui signifie que le label 240 du moteur 4 est deux fois plus élevé que le label 240 des moteurs 1, 2 et 3 en moyenne. La valeur de ce coefficient Q240 est obtenue à l'étape 38 et transmise ensuite au circuit 5 de déclenchement d'alarme.

Parallèlement au calcul du coefficient Q240, un coefficient Q244 est déterminé par le circuit électronique 4 de détermination du coefficient de surplus de consommation de la figure 4. Ce circuit 4 reçoit, aux entrées 41, 42, 43 et 44, les valeurs des labels 244 des moteurs, respectivement, 1, 2, 3 et 4. Autrement dit, ce circuit 4 reçoit, sur l'entrée 41, le débit de carburant du moteur 1, sur l'entrée 42, le débit de carburant du moteur 2, etc. Un ensemble d'éléments logiques 46 permet de comparer la valeur du label 244 de chaque moteur avec la valeur du label 244 des autres moteurs. On détermine ainsi la valeur du label 244 la plus élevée et, par conséquent, le moteur ayant le débit de carburant le plus important. Lorsque ce moteur a été déterminé, un message peut être affiché sur un écran du poste de pilotage de l'avion. Ce message, référencé 45, donne le numéro du moteur ayant le plus grand label 244. Par exemple, si c'est le moteur n°4 qui a le plus grand label 244, alors l'information 45 est N244 = 4.

Le résultat de cette comparaison est également utilisé, à l'étape 47, pour déterminer le coefficient de surplus de consommation, en terme de débit de carburant, référencé Q244. Ce coefficient de surplus de consommation Q244 correspond à la valeur obtenue en divisant la valeur du label 244 du moteur ayant le plus grand label 244 par la moyenne des autres labels 244. La valeur de ce coefficient Q244 est obtenue à l'étape 48 et transmise ensuite au circuit 5 de déclenchement d'alarme.

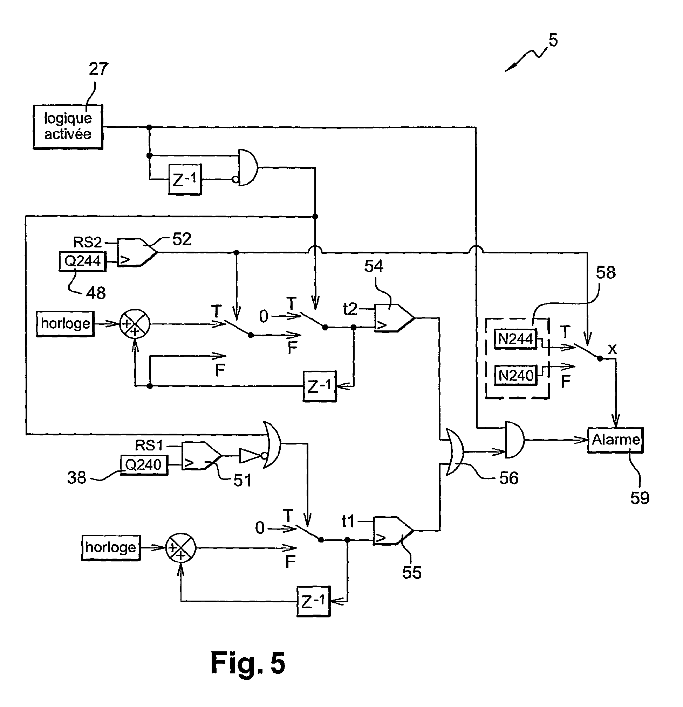

Les circuits 3 et 4 sont identiques, excepté qu'ils prennent en compte des valeurs de consommation de carburant différentes à savoir, pour le circuit 4, le débit de carburant mesuré directement par le débitmètre de chaque moteur 1, 2, 3, 4 et, pour le circuit 3, la quantité de carburant utilisée pendant un premier intervalle de temps par les moteurs 1, 2, 3 et 4. Sur la figure 5, on a représenté le circuit électronique 5 de déclenchement de l'alarme. Ce circuit électronique 5 prend en compte les résultats des circuits 2, 3 et 4. Plus précisément, le circuit 5 reçoit en entrée les informations suivantes :
- entrée 27 : il reçoit la donnée confirmant que la logique de détection peut être activée ;
- entrée 38 : il reçoit la valeur du coefficient de surplus de consommation Q240 ;
- en entrée 48 : il reçoit la valeur du coefficient de surplus de consommation Q244.

Le coefficient Q240 reçu à l'entrée 38 est comparé, par un comparateur 51, à une valeur de coefficient seuil, ou ratio seuil, RS1 à partir duquel on considère qu'il y a une fuite. Par exemple, ce ratio seuil peut être de 1,25, ce qui signifie, qu'à partir d'un coefficient Q240 de 25 %, on considère qu'il y a une fuite et qu'une alarme doit être donnée. Si le coefficient Q240 est supérieur à 1,25, alors le procédé vérifie, à l'étape 55, que cette information reste valable pendant un temps de confirmation t1. Ce temps de confirmation t1 peut être variable, en fonction du pourcentage du coefficient Q240. Par exemple, il peut être de 88 minutes si le pourcentage est compris entre 25 et 50 % et de 60 minutes si le pourcentage est compris entre 51 et 80 %. De préférence, le temps de confirmation est au moins de 2,5 fois le premier intervalle de temps du label 240 (c'est-à-dire 5 minutes) de façon à ce que la confirmation soit établie pour au moins deux labels 240.

Parallèlement, le coefficient Q244 reçu à l'entrée 48 est comparé, par un comparateur 52, à une valeur de ratio seuil RS2, supérieure à la valeur de ratio seuil RS1. Par exemple, ce ratio seuil RS2 peut être de 4, ce qui signifie que si le débit de carburant du moteur considéré est 4 fois supérieur au débit moyen des autres moteurs, alors on considère qu'il y a une fuite et qu'une alarme doit être donnée. Si le coefficient Q244 est supérieur à 4, alors le procédé vérifie, à l'étape 54, si cette information reste valable pendant un certain temps de confirmation t2. Pour le coefficient Q244, ce temps de confirmation t2 est de préférence fixe, par exemple égal à 4 minutes.

Les sorties de ces étapes de vérification 55 et 54 sont reliées à une porte logique OU 56. Dès qu'une donnée relative à la présence d'une fuite est reçue de la porte OU et si la logique de détection de fuite est activée (étape 27), alors un signal d'alarme peut être émis, à l'étape 59. Au contraire, s'il a été déterminé, à l'étape 27, que la logique de détection ne devait pas être activée, alors l'alarme n'est pas déclenchée.

Le procédé de l'invention propose de prendre en compte soit le coefficient Q244 correspondant au débit de carburant, soit le coefficient Q240 correspondant à la quantité de carburant utilisée pendant un certain intervalle de temps. Lorsque les fuites sont massives, par exemple de l'ordre de 3 à 5 tonnes de carburant en moins d'une heure, il n'y a pas besoin de lisser les éventuelles différences de carburant sur un temps de vol long. Il est alors intéressant de déterminer la quantité de fuite directement à partir du débit car, dans ce cas, la détection peut être réalisée en moins d'une heure de vol.

Dans le procédé de l'invention, on considère, qu'à partir d'un certain pourcentage de différence de consommation de carburant entre le moteur considéré et la moyenne des autres moteurs, le débit peut être pris en compte directement à la place de la quantité de carburant utilisée pendant un certain intervalle de temps. En effet, en dessous d'un certain pourcentage de surplus de consommation, par exemple de l'ordre de 20 à 30 %, la perte subie est trop faible pour être calculée directement à partir du débit. Comme expliqué précédemment, certains critères extérieurs influent sur le débit de carburant, ce qui rend le coefficient Q244 peu fiable, lorsque les fuites sont peu élevées. Au contraire, le coefficient Q240 est très fiable puisque calculé sur un certain intervalle de temps, avec lissage des différences par accumulation d'une certaine quantité de carburant avant comparaison. C'est pour cette raison que le procédé de l'invention utilise le label 240 qui est rafraîchi régulièrement.

## Revendications

1. - Procédé de détection et de localisation d'une fuite de carburant dans un moteur d'un aéronef du type multi-moteur, **caractérisé en ce qu'**il comporte les opérations consistant à :
(a) déterminer une consommation de carburant (L240, L244), pour chaque moteur de l'aéronef,
(b) comparer la consommation de chaque moteur avec la consommation des autres moteurs de l'aéronef (38),
(c) détecter le moteur ayant la plus forte consommation de carburant (35, 45),
(d) déterminer un ratio de surplus de consommation (Q240, Q244) de ce moteur par rapport aux autres moteurs (38, 48),
(e) vérifier si le surplus de consommation provient d'une fuite (51 - 56), et
(f) si l'étape (e) est vérifiée, déclencher une alarme (59).

2. - Procédé selon la revendication 1, **caractérisé en ce que** la consommation de carburant pour chaque moteur est une quantité de carburant (L240) utilisée pendant un premier intervalle de temps prédéfini.

3. - Procédé selon la revendication 2, **caractérisé en ce que** le premier intervalle de temps est un intervalle glissant.

4. - Procédé selon la revendication 1, **caractérisé en ce que** la consommation de carburant est le débit de carburant de chaque moteur (L244).

5. - Procédé selon l'une quelconque des revendications 1 à 4, **caractérisé en ce que** l'opération de vérification du surplus de consommation consiste à
- comparer (51, 52) la valeur du ratio de surplus (Q240, Q244) avec une valeur seuil du ratio de surplus prédéfinie (RS1, RS2), et
- confirmer (54, 55) si la valeur du ratio de surplus est maintenue pendant un second intervalle de temps prédéfini (t1, t2).

6. - Procédé selon la revendication 5, **caractérisé en ce que** le second intervalle de temps évolue inversement proportionnellement à la valeur du ratio de surplus.

7. - Procédé selon les revendications 2 et 4, **caractérisé en ce que** les opérations (a) à (e) sont réalisées, simultanément, pour une quantité de carburant utilisée pendant le premier intervalle de temps et pour un débit de carburant.

8. - Procédé selon la revendication 7, **caractérisé en ce que** l'opération (f) est déclenchée dès qu'un surplus de consommation est détecté (56), soit par la quantité de carburant, soit par le débit de carburant.

9. - Procédé selon l'une quelconque des revendications 7 et 8, **caractérisé en ce que** la valeur seuil du ratio (RS2) pour le débit de carburant est supérieure à la valeur seuil du ratio (RS1) pour la quantité de carburant.

10. - Procédé selon l'une quelconque des revendications 1 à 9, **caractérisé en ce qu'**il comporte une opération de localisation de la fuite avec détermination du moteur affecté de la fuite (35, 45, 58).

11. - Procédé selon l'une quelconque des revendications 1 à 10 **caractérisé en ce que** l'alarme n'est déclenchée que si certains critères relatifs aux conditions de vol sont remplis (27).

12. - Procédé selon l'une quelconque des revendications 1 à 11, **caractérisé en ce que** les opérations (a) à (e) ne sont réalisées que si les moteurs fonctionnent au même régime.

13. - Procédé selon la revendication 11, **caractérisé en ce que** le critère est que l'aéronef vole à une altitude minimum (23).

14. - Procédé selon l'une quelconque des revendications 11 et 12, **caractérisé en ce que** le critère est que les moteurs fonctionnent au-dessus d'un régime minimum (c5).

15. - Système de détection et de localisation d'une fuite de carburant dans un moteur d'un aéronef du type multi-moteur, **caractérisé en ce qu'**il met en oeuvre le procédé selon l'une quelconque des revendications 1 à 14.

16. - Système selon la revendication 15, **caractérisé en ce qu'**il est installé dans un calculateur d'aéronef et connecté, pour chaque moteur, à un calculateur du moteur afin de recevoir des données relatives aux conditions de fonctionnement de l'aéronef et de chaque moteur.

17. - Système selon l'une quelconque des revendications 15 et 16, **caractérisé en ce qu'**il comporte des circuits logiques (2, 3, 4, 5) aptes à traiter des données reçues des calculateurs moteurs et du calculateur d'aéronef.

18. - Système selon l'une quelconque des revendications 15 à 17,
**caractérisé en ce qu'**il comporte
- un circuit de vérification des conditions de vol (2),
- au moins un circuit de détection du ratio de surplus de consommation (3, 4), et
- un circuit de déclenchement d'une alarme (5).

19. - Aéronef du type multi-moteur, **caractérisé en ce qu'**il comporte un système selon les revendications 15 à 18.

## Claims

1. - Method for the detection and locating of a fuel leak in an engine of an aircraft of the multi-engine type, **characterized in that** it comprises the operations consisting in:
(a) determining a fuel consumption (L240, L244) for each engine of the aircraft,
(b) comparing the consumption of each engine with the consumption of the other engines of the aircraft (38),
(c) detecting the engine having the greatest fuel consumption (35, 45),
(d) determining a consumption surplus ratio (Q240, Q244) of this engine relative to the other engines (38, 48),
(e) verifying whether the surplus consumption comes from a leak (51-56), and
(f) if the step (e) is verified, triggering an alarm (59).

2. - Method according to claim 1, **characterized in that** the fuel consumption for each engine is a quantity of fuel (L240) used in a first predefined time interval.

3. - Method according to claim 2, **characterized in that** the first time interval is a sliding interval.

4. - Method according to claim 1, **characterized in that** the fuel consumption is the fuel flow rate for each engine (L244).

5. - Method according to one of the claims 1 to 4, **characterized in that** the operation of checking the consumption surplus consists in:
- comparing (51, 52) the value of the surplus ratio (Q240, Q244) with a predefined threshold value of the surplus ratio (RS1, RS2), and
- confirming (54, 55) whether the value of the surplus ratio is maintained during a second predefined time interval (t1, t2),

6. - Method according to claim 5, **characterized in that** the second time interval develops inversely proportionally to the value of the surplus ratio.

7. - Method according to claims 2 and 4, **characterized in that** the operations (a) to (e) are performed simultaneously for a quantity of fuel used during the first time interval and for a fuel flow rate.

8. - Method according to claim 7, **characterized in that** the operation (f) is triggered if the consumption surplus is detected (56) either through the quantity of fuel or through the fuel flow rate.

9. - Method according to any one of the claims 7 and 8, **characterized in that** the threshold value of the ratio (RS2) for the fuel flow rate is greater than the threshold value of the ratio (RS1) for the quantity of fuel.

10. - Method according to one of the claims 1 to 9, **characterized in that** it comprises an operation to locate the leak with a determining of the engine affected by the leak (35, 45, 58).

11. - Method according to one of the claims 1 to 10 **characterized in that** the alarm is triggered only if certain criteria pertaining to the flight conditions are fulfilled (27).

12. - Method according to one of the claims 1 to 11, **characterized in that** the operations (a) to (e) after performed only if the engines work at the same speed.

13. - Method according to claim 11, **characterized in that** the criterion is that the aircraft flies at a minimum altitude (23).

14. - Method according to one of the claims 11 and 12, **characterized in that** the criterion is that the engines work above a minimum speed (c5).

15. - System for detecting and locating a fuel leak in an engine of a multi-engine type aircraft, **characterized in that** the system implements the method according to one of the claims 1 to 14.

16. - System according to claim 15, **characterized in that** it is installed in an aircraft computer and connected, for each engine, to an engine computer in order to receive data on the conditions of operation of the aircraft and of each engine.

17. - System according to one of the claims 15 and 16, **characterized in that** it comprises logic circuits (2, 3, 4, 5) capable of processing data received from the engine computers and from the aircraft computer.

18. - System according to one of the claims 15 to 17, **characterized in that** it comprises
- a verification circuit for verifying flight conditions (2),
- at least one circuit for detecting the consumption surplus ratio (3, 4), and
- a circuit for triggering an alarm (5).

19. - Aircraft of the multi-engine type **characterized in that** it comprises a system according to claims 15 to 18.

## Patentansprüche

1. - Verfahren zur Erfassung und Lokalisierung eines Treibstofflecks in einem Triebwerk eines mehrmotorigen Luftfahrzeugs, **dadurch gekennzeichnet, dass** es folgende Operationen enthält:
(a) Bestimmung eines Treibstoffverbrauchs (L240, L244) für jedes Triebwerk des Luftfahrzeugs,
(b) Vergleich des Verbrauchs jedes Triebwerks mit dem Verbrauch der anderen Triebwerke des Luftfahrzeugs (38),
(c) Erfassen des Motors mit dem stärksten Treibstoffverbrauch (35, 45),
(d) Bestimmung eines Verhältnisses des Treibstoffmehrverbrauchs (Q240, Q244) dieses Triebwerks im Vergleich zu den anderen Triebwerken (38, 48),
(e) Überprüfen, ob der Treibstoffmehrverbrauch aus einem Leck (51-56) stammt, und
(f) Auslösen eines Alarms (59), wenn der Schritt (e) überprüft ist.

2. - Verfahren nach Anspruch 1, **dadurch gekennzeichnet, dass** der Treibstoffverbrauch für jedes Triebwerk eine Treibstoffmenge (L240) ist, die während eines ersten vorbestimmten Zeitintervalls verwendet wird.

3. - Verfahren nach Anspruch 2, **dadurch gekennzeichnet, dass** das erste Zeitintervall ein gleitendes Intervall ist.

4. - Verfahren nach Anspruch 1, **dadurch gekennzeichnet, dass** der Treibstoffverbrauch dem Treibstoffdurchfluss eines jeden Triebwerks (L244) entspricht.

5. - Verfahren nach irgendeinem der Ansprüche 1 bis 4, **dadurch gekennzeichnet, dass** die Operation zur Überprüfung des Treibstoffmehrverbrauchs darin besteht,
- den Wert des Verhältnisses des Mehrverbrauchs (Q240, Q244) mit einem vordefinierten Grenzwert des Mehrverbrauchsverhältnisses (RS1, RS2) zu vergleichen (51, 52), und
- zu bestätigen (54, 55), wenn der Wert des Mehrverbrauchsverhältnisses innerhalb eines zweiten vordefinierten Zeitintervalls (t1, t2) beibehalten wird.

6. - Verfahren nach Anspruch 5, **dadurch gekennzeichnet, dass** sich das zweite Zeitintervall indirekt proportional zum Wert des Mehrverbrauchsverhältnisses entwickelt.

7. - Verfahren nach den Ansprüchen 2 und 4, **dadurch gekennzeichnet, dass** die Operationen (a) bis (e) gleichzeitig für eine Treibstoffmenge durchgeführt werden, die während des ersten Zeitintervalls und für einen Treibstoffdurchfluss verwendet wird.

8. - Verfahren nach Anspruch 7, **dadurch gekennzeichnet, dass** die Operation (f) ausgelöst wird, sobald ein Treibstoffmehrverbrauch entweder durch die Treibstoffmenge, oder durch den Treibstoffdurchfluss erfasst (56) wird.

9. - Verfahren nach irgendeinem der Ansprüche 7 und 8, **dadurch gekennzeichnet, dass** der Grenzwert des Verhältnisses (RS2) für den Treibstoffdurchfluss über dem Grenzwert des Verhältnisses (RS1) für die Treibstoffmenge liegt.

10. - Verfahren nach irgendeinem der Ansprüche 1 bis 9, **dadurch gekennzeichnet, dass** es eine Operation zur Lokalisierung des Lecks mit der Bestimmung des vom Leck betroffenen Triebwerks (35, 45, 58) enthält.

11. - Verfahren nach irgendeinem der Ansprüche 1 bis 10, **dadurch gekennzeichnet, dass** der Alarm nur dann ausgelöst wird, wenn bestimmte Kriterien in Bezug auf die Flugbedingungen erfüllt (27) sind.

12. - Verfahren nach irgendeinem der Ansprüche 1 bis 11, **dadurch gekennzeichnet, dass** die Operationen (a) bis (e) nur dann durchgeführt werden, wenn die Triebwerke mit derselben Drehzahl betrieben werden.

13. - Verfahren nach Anspruch 11, **dadurch gekennzeichnet, dass** das Kriterium darin besteht, dass das Luftfahrzeug auf einer Mindestflughöhe (23) fliegt.

14. - Verfahren nach irgendeinem der Ansprüche 11 und 12, **dadurch gekennzeichnet, dass** das Kriterium darin besteht, dass die Triebwerke über einer Mindestdrehzahl (c5) laufen.

15. - System zur Erfassung und Lokalisierung eines Treibstofflecks in einem Triebwerk eines mehrmotorigen Luftfahrzeugs, **dadurch gekennzeichnet, dass** es das Verfahren nach irgendeinem der Ansprüche 1 bis 14 umsetzt.

16. - System nach Anspruch 15, **dadurch gekennzeichnet, dass** es in einem Luftfahrzeugrechner installiert, und für jedes Triebwerk mit einem Triebwerkrechner verbunden ist, um Daten bezüglich den Betriebsbedingungen des Luftfahrzeugs und jedes Triebwerks zu empfangen.

17. - System nach irgendeinem der Ansprüche 15 und 16, **dadurch gekennzeichnet, dass** es Verknüpfungsschaltungen (2, 3, 4, 5) enthält, die in der Lage sind, die empfangenen Daten aus den Triebwerkrechnern und dem Luftfahrzeugrechner zu verarbeiten.

18. - System nach irgendeinem der Ansprüche 15 bis 17, **dadurch gekennzeichnet, dass** es folgendes enthält
- eine Schaltung zur Überprüfung der Flugbedingungen (2),
- zumindest eine Schaltung zur Erfassung des Mehrverbrauchsverhältnisses (3, 4), und
- eine Schaltung zum Auslösen eines Alarmes (5).

19. - Mehrmotoriges Luftfahrzeug, **dadurch gekennzeichnet, dass** es ein System nach den Ansprüchen 15 bis 18 enthält.
